# EUROPEAN PATENT SPECIFICATION

(11) **EP 2 954 578 B1**
(45) Date of publication and mention of the grant of the patent: **21.06.2023**
(21) Application number: 13870451.5
(22) Date of filing: 08.01.2013
(51) Int. Cl.: H01M 4/92, H01M 4/90

(54) **FUEL CELL CATALYST TREATMENT**
BRENNSTOFFZELLENKATALYSATORBEHANDLUNG
TRAITEMENT DE CATALYSEUR DE PILE À COMBUSTIBLE

(43) Date of publication of application: 16.12.2015
(73) Proprietor: Audi AG, 85045 Ingolstadt (DE)
(72) Inventor: MARZULLO, Jesse M., Enfield, Connecticut 06082 (US); IZZO, Elise Lorraine, Windsor, Connecticut 06095 (US); DARLING, Robert Mason, South Windsor, Connecticut 06074 (US)
(74) Representative: Hentrich Patent- & Rechtsanwaltspartnerschaft mbB
(86) International application number: PCT/US2013/020606
(87) International publication number: WO 2014/109729

(56) References cited:
- EP-A1- 2 308 596
- WO-A1-2012/115624
- JP-A- 2006 231 266
- KR-A- 20130 001 876
- US-A1- 2002 111 268
- US-A1- 2003 017 378
- US-A1- 2007 129 247
- US-A1- 2008 200 741
- BRANDON BARTLING ET AL: "Development of nano-metallic catalysts for the single-use, disposable biomedical sensor platform technology", 2009 IEEE INTERNATIONAL CONFERENCE ON NANO/MOLECULAR MEDICINE AND ENGINEERING : NANOMED ; 18-21 OCT. 2009, TAINAN, IEEE, XX, 18 October 2009 (2009-10-18), pages 253-258, XP031740289, ISBN: 978-1-4244-5528-7
- XU Y ET AL: "Effects of annealing treatment and pH on preparation of citrate-stabilized PtRu/C catalyst", JOURNAL OF POWER SOURCES, ELSEVIER SA, CH, vol. 162, no. 1, 8 November 2006 (2006-11-08), pages 132-140, XP027938336, ISSN: 0378-7753 [retrieved on 2006-11-08]

## Description

### BACKGROUND

Fuel cells facilitate an electrochemical reaction for generating electricity. One of the important aspects of a fuel cell is the efficiency of the catalyst. Fuel cell performance, such as current density, may be negatively affected if a catalyst is not able to perform in a desired or optimum manner. There have been a variety of proposals at improving fuel cell catalyst performance.

Other issues associated with fuel cell performance involve water management. For example, oversaturated conditions, especially at low operating temperatures, tend to decrease fuel cell performance. Fuel cell membrane dry out is another contributor to less-than-optimal performance.

WO 2012/115624 A1 describes a method of forming a catalyst with an atomic layer of platinum atoms. The starting material for forming the catalyst is carbon supported palladium. In a first step the carbon supported palladium obtains a copper shell by way of an under potential deposition. This copper shell is replaced in a displacement reaction by a monolayer of platinum. The displacement reaction is conducted in the presence of a surfactant, e.g. citric acid for slowing the reaction rate, for controlling and for reducing the deposition of platinum atoms on top of other platinum atoms which are already deposited. This method yields then to platinum-based and carbon-supported catalyst particles.

US 2007/0129247 A1 describes a carbon monoxide catalyst based on platinum and cobalt. This Pt-Cocatalyst is used for removal of CO from hydrogenrich gas in fuel cells.

EP 2 308 596 A1 describes a method of preparation or modification of Cu/Zeolite catalysts. These catalysts are used for removal or selective catalytic reduction of NOₓ from exhaust gas streams in diesel combustion engines.

US 2003/0017378 A1 describes a method of preparing a platinum-ruthenium catalyst for PEM fuel cells. The ruthenium has a high activity for the oxidation of CO due to its metallic state. For the preparation of the catalyst a hexachloroplatinic acid and ruthenium are added to a suspension. To increase the pH of this strongly acidic new suspension, an alkaline solution, preferably caustic soda solution is added to the suspension. In some embodiments a citric acid and a carbon support may be added before the whole solution is dried. This method yields then to platinum-based and carbon-supported catalyst particles.

US 2008/200741 A1 describes a process for preparing a dehydrogenation catalyst comprising the method of preparing a mixture of treated regenerator iron oxide and at least one additional catalyst component, wherein the treated regenerator iron oxide is prepared by washing a regenerator iron oxide at a temperature below 350 °C.

US 2002/111268 A1 teaches a method to prepare a catalyst for removing dioxin The catalyst is prepared by recycling a spent catalyst discharged from a hydro-desulfurization process of an oil refinery. The catalyst obtained here has excellent dioxin removal performance and low preparation cost because of recycling the spent catalyst.

JP 2006 231266 A teaches a catalyst nanoparticle comprising a nanoparticle having a metal element and a layer such as Pt covering a part of the surface of the nanoparticle is formed by a carboxylic acid compound such as citric acid. A colloidal solution contains catalyst nanoparticles having a structure in which the catalyst nanoparticles are dispersed and stabilized by a carboxylic acid compound.

KR 2013 0001876 A proposes a method to prepare a catalyst for a fuel cell wherein the method comprising preparing a carbon carrier, supporting or coating a metal catalyst precursor solution on the carbon support, growing carbon nanotubes on the carbon carrier and supporting a metal catalyst on the carbon nanotubes.

BRANDON BARTLING ET AL: "Development of nano-metallic catalysts for the single-use, disposable biomedical sensor platform technology" 2009 IEEE INTERNATIONAL CONFERENCE ON NANO/MOLECULAR MEDICINE AND ENGINEERING: NANOMED; 18-21 OCT. 2009, TAINAN IEEE, XX,18 October 2009 (2009-10-18), pages 253-258, XP031740289; ISBN: 978-1-4244-5528-7 teaches the preparation of nano-particle metallic catalyst and the applications of bimetallic nano-particle catalysts for biosensor applications.

XU Y ET AL: "Effects of annealing treatment and pH on preparation of citrate-stabilized PtRu/C catalyst", JOURNAL OF PWER SOURCES; ELSEVIER SA, CH; vol. 162, no. 1,8 November 2006 (2006-11-08), pages 132-140, XP027938336 ISSN: 0378-7753 [retrieved on 2006-11-08] teaches the preparation of a bimetallic PtRu/C anode catalyst by citrate-stabilized chemical reduction method.

It is an object of the present invention to provide a method of preparing a platinum-based catalyst for a membrane electrode assembly of a fuel cell component reflecting a higher current density for a given cell voltage while reducing the sensitivity of the fuel cell performance to the operating temperatures. Furthermore, it is an object of the present invention to provide suitable catalyst obtainable by this method.

### SUMMARY

This problem is solved by a method according to claim 1.

According to an embodiment, a method of preparing a catalyst for a fuel cell component includes soaking catalyst particles in citric acid. The catalyst particles are then rinsed after having been soaked in the citric acid.

According to an embodiment, catalyst particles are dried after they have been rinsed. When desired, the pre-treated catalyst particles may be incorporated into a catalyst ink used for making a fuel cell component.

The various features and advantages of a disclosed example embodiment will become apparent to those skilled in the art from the following detailed description. The drawings that accompany the detailed description can be briefly described as follows.

### BRIEF DESCRIPTION OF THE DRAWINGS

Figure 1 schematically illustrates an example process for treating a catalyst useful for a fuel cell component.
Figure 2 graphically illustrates a performance characteristic of an example fuel cell component including a catalyst treated according to an embodiment of this invention.
Figure 3 graphically illustrates another performance characteristic of an example fuel cell component including a catalyst treated according to an embodiment of this invention.
Figure 4 illustrates another performance characteristic of an example fuel cell component including a catalyst treated according to an embodiment of this invention.

### DETAILED DESCRIPTION

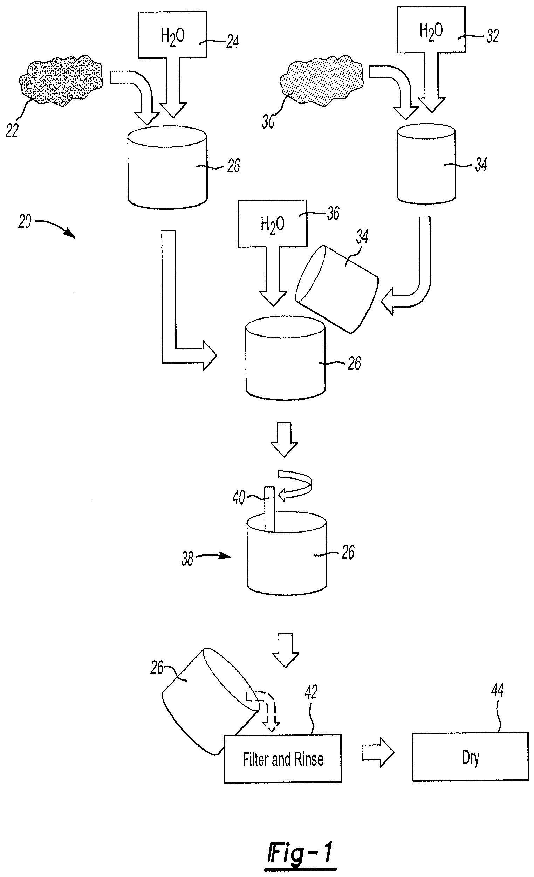

Figure 1 schematically illustrates a process 20 for pre-treating a catalyst that is useful for making a fuel cell component, such as a catalyst layer that is included in a membrane electrode assembly. Catalyst particles 22 are combined with water 24 in a container 26. In one example, the catalyst particles 22 are commercially available platinum-based catalyst particles. For example, Pt/C catalyst particles are included in one example embodiment.

Citric acid 30 is dissolved in water 32 within another container 34. Additional water 36 is added to the container 26 along with the citric acid from the container 34. In one example, about lg of 20% Pt/C catalyst is combined with 400 ml water in the container 26, about 7.5g citric acid is dissolved in 200 ml water in the container 34 and another 100 ml water 36 is added to yield the mixture in the container 26 as shown at 38.

The mixture including the catalyst particles 22, the citric acid 30 and water 36 within the container 26 is stirred using a stirring device 40. One example includes stirring the mixture for a period of approximately two hours.

After a desired amount of stirring, the mixture is filtered at 42 and the catalyst particles are rinsed. One example includes repeatedly filtering and rinsing the catalyst particles. For example, the original mixture from the container 26 is filtered to separate out the catalyst particles. Those particles are then placed in a water bath and stirred for a period of approximately 30 minutes. That mixture is then filtered and rinsed in another water bath, which is stirred for another thirty minutes. That filtering and rinsing procedure may be repeated several times and, in one example, is performed four consecutive times.

After the rinsing is complete, the catalyst is dried at 44. One example includes drying the catalyst particles in vacuum in an oven using a temperature of approximately 50° C. The drying of the catalyst particles in one example occurs over a period of approximately three days.

Once the catalyst particles that have been treated with citric acid are dry, they may be sieved into catalyst powder and formulated into a catalyst ink. The catalyst ink may then be used in a known manner to establish a fuel cell component. One example fuel cell component made with a catalyst ink including catalyst particles pretreated with citric acid according to the example process shown in Figure 1 is a catalyst layer of an electrode.

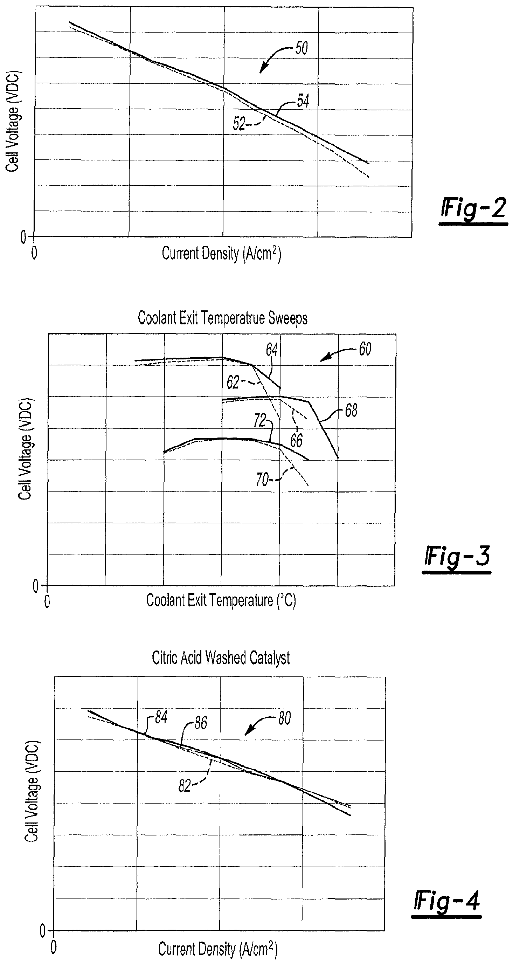

Pre-treating a catalyst using the disclosed process improves fuel cell performance. Figure 2 includes a graphical illustration 50 of a performance characteristic of a fuel cell including a pre-treated catalyst in at least one fuel cell component such as the catalyst layer. Figure 2 includes a first plot 52 indicating the performance of a fuel cell including a catalyst, such as a 20% Pt/C catalyst that has not been pre-treated using the process schematically shown in Figure 1. Another plot 54 shows the fuel cell performance, in terms of current density, using a catalyst that has been pre-treated with citric acid. As can be appreciated from Figure 2, a higher current density is achieved for a given cell voltage when using a pre-treated catalyst compared to one that has not been pre-treated with citric acid.

Figure 3 includes a graphical illustration 60 of another performance characteristic. A first plot 62 of cell voltage for various coolant exit temperatures shows performance using a standard catalyst for a selected current level. A second plot 64 shows cell performance for the same current level using a pre-treated catalyst. As temperature increases, a fuel cell tends to dry out. The improvement in performance seen by comparing the curve 64 to the curve 62 indicates that using a catalyst that is pre-treated with citric acid tends to reduce the amount of drying out within the fuel cell at the higher temperatures. This results in an increase in cell voltage, which is an improvement in performance.

Figure 3 includes another plot 66 of cell voltage at various coolant exit temperatures for a relatively higher current level compared to that used for establishing the plot 62. The plot 66 corresponds to a fuel cell having a standard catalyst. A comparable plot 68 shows performance at the same current level using a catalyst that has been pre-treated with citric acid. Again, the plot 68 shows an improvement of performance compared to the plot 66, which indicates that the pretreated catalyst has an associated reduced amount of cell dry out at higher temperatures. Another plot 70 shows the standard catalyst performance at a third, higher current level. The plot 72 shows performance using a pre-treated catalyst at the same, third current level. In each instance shown in Figure 3, the pre-treated catalyst showed improved performance compared to a standard catalyst.

Figure 4 includes a graphical illustration 80 comparing cell voltage and current density (e.g., another performance characteristic). Three plots 82, 84 and 86 all show the performance level of a fuel cell including a pre-treated catalyst. Each of the plots corresponds to a different operating temperature. As can be appreciated from the illustration, there is only limited difference among the plots 82, 84 and 86. Figure 4 illustrates that using a catalyst pre-treated with citric acid reduces the sensitivity of fuel cell performance to the operating temperature. This provides an associated fuel cell performance improvement under wet conditions.

There are various aspects of pre-treating a catalyst with citric acid using a procedure like that schematically shown in Figure 1 and described above. One aspect is that the improvement in performance is an unexpected result. One theory was that citric acid would result in lower performance. As indicated above, pre-treating a catalyst with citric acid surprisingly provides improved performance under a variety of operating conditions, including very cold, saturated conditions.

Another aspect of using a pre-treated catalyst is that there is no tradeoff between wet and dry condition improvements. As shown in Figure 4, the performance is relatively insensitive to temperature. This allows for an improvement under wet conditions. As shown in Figure 3, there is an improvement under dry conditions. Prior approaches to attempting to improve catalyst performance typically involved a tradeoff between wet and dry conditions. Some approaches may have provided some improvement under wet conditions while other approaches may have provided some improvement under dry conditions but it has not been believed possible to achieve improvement under both conditions. Using a citric acid pre-treatment according to an embodiment of this invention provides improvement under both conditions without any tradeoff.

The performance improvements shown in Figures 2-4 may be attributable to the citric acid acting as a surfactant that facilitates better dispersion of catalyst powder in a catalyst ink used for establishing a fuel cell electrode. Better dispersion of the catalyst powder within a catalyst ink tends to reduce catalyst agglomerates and allows for achieving a thinner ionomer film. Such features may enhance fuel cell performance.

The pre-treatment with citric acid may change the surface functionality of the carbon support (used to establish a catalyst layer). Altering the surface functionality of the carbon support may help disburse it better in a catalyst ink. A change to the surface functionality of the carbon support may also assist in local water management improvements.

Another aspect of pre-treating the catalyst with citric acid is that the citric acid may remove other contaminants that would tend to inhibit performance. The citric acid also may remove free platinous (e.g., Pt²⁺) ions that otherwise could increase the resistance of the ionomer in the catalyst layer.

Another possible aspect associated with pre-treating the catalyst with citric acid includes dissolution and redistribution of the platinum particles to remove particle defects, which leaves a more uniform particle shape with more active sites. Additionally, it may be possible to achieve more uniform particle size distribution, leading to smaller agglomerates and better catalyst ink mixing.

The improved cell performance associated with pre-treating a catalyst using citric acid addresses performance issues such as performance loss under certain temperature conditions and desired water management.

## Claims

1. A method of preparing a platinum-based catalyst for a membrane electrode assembly of a fuel cell component, comprising the steps of:
soaking platinum-based and carbon supported catalyst particles in citric acid; and
rinsing the catalyst particles after the soaking
**characterized in that**
the soaking comprises mixing the catalyst particles in a liquid and
adding the citric acid to the liquid.

2. The method of claim 1, wherein the liquid comprises water.

3. The method of claim 2, wherein the soaking comprises
mixing the catalyst particles in a first portion of the water;
dissolving citric acid in a second portion of the water; and
mixing the first and second portions of water.

4. The method of claim 1, comprising
a first amount of the catalyst particles; and
a second amount of the citric acid, wherein the second amount is greater than the first amount.

5. The method of claim 4, wherein the second amount is approximately 5 times greater than the first amount.

6. The method of claim 1, wherein the rinsing comprises
filtering the catalyst particles;
rinsing the filtered catalyst particles with water.

7. The method of claim 6, comprising
repeating the filtering and rinsing with water a plurality of times.

8. The method of claim 1, comprising
drying the rinsed catalyst particles; and
preparing a catalyst ink using the dried catalyst particles.

9. The method of claim 8, wherein the drying comprises
heating the catalyst particles at a temperature of approximately 50°C for a period of approximately 3 days.

10. The method of claim 1, comprising
preparing a mixture of the catalyst particles, the citric acid and water;
stirring the mixture;
removing the catalyst particles from the mixture;
rinsing the removed catalyst particles; and
drying the rinsed catalyst particles.

## Patentansprüche

1. Verfahren zur Herstellung eines Katalysators auf Platinbasis für eine Membranelektrodenanordnung einer Brennstoffzellenkomponente, das die folgenden Schritte umfasst:
Durchtränken von Katalysatorteilchen auf Platinbasis und Kohlenstoffträger in Zitronensäure; und
Spülen der Katalysatorteilchen nach dem Einweichen,
**dadurch gekennzeichnet, dass**
das Durchtränken das Mischen der Katalysatorteilchen in einer Flüssigkeit und die Zugabe der Zitronensäure zu der Flüssigkeit umfasst.

2. Verfahren nach Anspruch 1, wobei die Flüssigkeit Wasser umfasst.

3. Verfahren nach Anspruch 2, wobei das Durchtränken Folgendes umfasst
Mischen der Katalysatorteilchen in einem ersten Teil des Wassers;
Lösen von Zitronensäure in einem zweiten Teil des Wassers; und
Mischen der ersten Teils und des zweiten Teils des Wassers.

4. Verfahren nach Anspruch 1, umfassend
eine erste Menge der Katalysatorteilchen; und
eine zweite Menge der Zitronensäure, wobei die zweite Menge größer ist als die erste Menge.

5. Verfahren nach Anspruch 4, wobei die zweite Menge ungefähr 5 mal größer als die erste Menge ist.

6. Verfahren nach Anspruch 1, wobei das Spülen Folgendes umfasst
Filtern der Katalysatorteilchen;
Spülen der gefilterten Katalysatorteilchen mit Wasser.

7. Verfahren nach Anspruch 6, umfassend
mehrmaliges Wiederholen des Filterns und Spülens mit Wasser.

8. Verfahren nach Anspruch 1, umfassend
Trocknen der gespülten Katalysatorteilchen; und
Herstellen einer Katalysatortinte unter Verwendung der getrockneten Katalysatorteilchen.

9. Verfahren nach Anspruch 8, wobei das Trocknen Folgendes umfasst
Erhitzen der Katalysatorteilchen auf eine Temperatur von etwa 50°C für eine Dauer von etwa 3 Tagen.

10. Verfahren nach Anspruch 1, umfassend
Herstellen einer Mischung aus den Katalysatorteilchen, der Zitronensäure und Wasser;
Verrühren der Mischung;
Entfernen der Katalysatorteilchen aus der Mischung;
Spülen der entfernten Katalysatorteilchen; und
Trocknen der gespülten Katalysatorteilchen.

## Revendications

1. Procédé de préparation d'un catalyseur à base de platine pour un ensemble membrane-électrode d'un composant de pile à combustible, comprenant les étapes consistant à :
tremper des particules de catalyseur à base de platine et supporté par du carbone dans de l'acide citrique ; et
rincer les particules de catalyseur après le trempage
**caractérisé en ce que**
le trempage comprend le mélange des particules de catalyseur dans un liquide et
l'ajout de l'acide citrique au liquide.

2. Procédé selon la revendication 1, dans lequel le liquide comprend de l'eau.

3. Procédé selon la revendication 2, dans lequel le trempage comprend
le mélange des particules de catalyseur suivant une première portion de l'eau ;
la dissolution de l'acide citrique dans une seconde portion de l'eau ; et
le mélange des première et seconde portions d'eau.

4. Procédé selon la revendication 1, comprenant
une première quantité des particules de catalyseur ; et
une seconde quantité de l'acide citrique, dans lequel la seconde quantité est supérieure à la première quantité.

5. Procédé selon la revendication 4, dans lequel la seconde quantité est environ 5 fois supérieure à la première quantité.

6. Procédé selon la revendication 1, dans lequel le rinçage comprend
le filtrage des particules de catalyseur ;
le rinçage des particules de catalyseur filtrées avec de l'eau.

7. Procédé selon la revendication 6, comprenant
la répétition du filtrage et du rinçage avec de l'eau une pluralité de fois.

8. Procédé selon la revendication 1, comprenant
le séchage des particules de catalyseur rincées ; et
la préparation d'une encre catalytique à l'aide des particules de catalyseur séchées.

9. Procédé selon la revendication 8, dans lequel le séchage comprend
le chauffage des particules de catalyseur à une température d'environ 50 °C pendant une période d'environ 3 jours.

10. Procédé selon la revendication 1, comprenant
la préparation d'un mélange composé des particules de catalyseur, de l'acide citrique et d'eau ;
l'agitation du mélange ;
l'élimination des particules de catalyseur du mélange ;
le rinçage des particules de catalyseur éliminées ; et
le séchage des particules de catalyseur rincées.
